# EUROPEAN PATENT APPLICATION

(11) **EP 3 116 191 A1**
(43) Date of publication of application: **11.01.2017**
(21) Application number: 16178292.5
(22) Date of filing: 07.07.2016
(51) Int. Cl.: H04L 29/06, H04L 29/08

(54) **PROGRAM,NON-TRANSITORY COMPUTER-READABLE RECORDING MEDIUM STORING INFORMATION PROCESSING PROGRAM, INFORMATION PROCESSING APPARATUS, AND INFORMATION PROCESSING METHOD**

(30) Priority: 10.07.2015 JP 2015138759
(71) Applicant: OnSite Co., Ltd., Tokyo 102-0072 (JP)
(72) Inventor: MATSUSHITA, Takashi, Tokyo 102-0072 (JP)
(74) Representative: Betten & Resch

(57) **Abstract**

Provided is a recording medium storing an information processing program including: specifying access information with respect to a web site; establishing a session between an information processing apparatus and an authentication server apparatus by causing authenticator to access the authentication server apparatus via a communication network based on the access information specified by the specifying; executing an individual identity authentication process for the information processing apparatus independently of at least one web browser in response to a response from the authentication server apparatus by using the session established by the establishing; and activating, when authentication by the individual identity authentication process succeeds, the at least one web browser, providing information of the session and the access information to the at least one web browser, and causing the at least one web browser to access the web site based on the information of the session and the access information.

## Description

### Background

The present invention relates to a program, a non-transitory computer-readable recording medium storing an information processing program, an information processing apparatus, and an information processing method for accessing servers on the Internet.

Hitherto, web browsers such as "Internet Explorer" (trademark) have been installed in terminal apparatus such as a personal computer. With this, web servers on the Internet can be accessed, and various web sites can be browsed. On such web browsers, when functions of programs such as "ActiveX" (trademark) and "Java applet" (trademark) are installed, web pages can be displayed in various manners, or interactivity can be provided thereto. With this, fun and convenience in browsing the web sites can be significantly enhanced.

Meanwhile, such programs have security risks of enabling malicious users to make illegal access to files in the computer, and to steal information therefrom.

As a countermeasure, for the purpose of enhancing security or other purposes, some of the browsers are configured to limit operations of those programs.

### Summary

However, as a result of the limitation by the browsers onto operations of the programs such as ActiveX and Java applet, there has occurred a problem in that individual identity authentication processes on terminals, which have been executed hitherto in accordance with those programs, cannot be executed.

In view of such circumstances, the present invention has been made to achieve an object of providing a non-transitory computer-readable recording medium storing an information processing program, an information processing apparatus, and an information processing method that allow access to a web site via an appropriate web browser under a state in which a secure session is established.

According to an embodiment of the present invention, there is provided a program for causing an information processing apparatus to execute an individual identity authentication process for the information processing apparatus,
the information processing apparatus including:
display;
authenticator; and
at least one web browser configured to access a web site via a communication network, and to cause the display to display information acquired from the web site,
the information processing program for causing the information processing apparatus to execute the individual identity authentication process including:
specifying access information with respect to the web site;
establishing a session between the information processing apparatus and an authentication server apparatus by causing the authenticator to access the authentication server apparatus via the communication network based on the access information specified by the specifying of the access information;
executing the individual identity authentication process for the information processing apparatus independently of the at least one web browser in response to a response from the authentication server apparatus by using the session established by the establishing of the session; and
activating, when authentication by the individual identity authentication process succeeds, the at least one web browser, providing information of the session and the access information to the at least one web browser, and causing the at least one web browser to access the web site based on the information of the session and the access information.

According to an embodiment of the present invention, there is provided a non-transitory computer-readable recording medium storing an information processing program for causing an information processing apparatus to execute an individual identity authentication process for the information processing apparatus,
the information processing apparatus including:
display;
authenticator; and
at least one web browser configured to access a web site via a communication network, and to cause the display to display information acquired from the web site,
the information processing program for causing the information processing apparatus to execute the individual identity authentication process including:
specifying access information with respect to the web site;
establishing a session between the information processing apparatus and an authentication server apparatus by causing the authenticator to access the authentication server apparatus via the communication network based on the access information specified by the specifying of the access information;
executing the individual identity authentication process for the information processing apparatus independently of the at least one web browser in response to a response from the authentication server apparatus by using the session established by the establishing of the session; and
activating, when authentication by the individual identity authentication process succeeds, the at least one web browser, providing information of the session and the access information to the at least one web browser, and causing the at least one web browser to access the web site based on the information of the session and the access information.

It is preferred that the at least one web browser include a web browser associated with the access information that is necessary for access to the web site, and that, the activating of the at least one browser includes selecting and activating, when the authentication by the individual identity authentication process succeeds, the web browser associated with the access information.

It is also preferred that the information processing program further include causing the display to display the information acquired from the web site by the at least one web browser that has accessed the web site in the activating of the at least one browser.

It is also preferred that the executing of the individual identity authentication process include:
firstly acquiring individual identification information of the information processing apparatus in response to the response from the authentication server apparatus;
secondly acquiring user authentication information of a user of the information processing apparatus;
causing the authentication server apparatus to execute the individual identity authentication process by providing the individual identification information and the user authentication information to the authentication server apparatus; and
receiving a result of the individual identity authentication process from the authentication server apparatus.

It is also preferred that the individual identification information include at least one of:
specific identification information items of hardware modules of the information processing apparatus, the hardware modules including a central processing unit and a hard disk drive;
specific identification information items of software modules of the information processing apparatus, the specific identification information items of the software modules including a serial number of a basic input/output system and a license number of an operating system; and
a random number shared between the information processing apparatus and the authentication server apparatus.

It is also preferred that the activating of the at least one browser include causing, in the information processing apparatus, the display to display the information acquired from the web site associated with the access information on the web browser associated with the access information except when the information processing apparatus receives a response that the individual identity authentication process is necessary from the authentication server apparatus.

It is also preferred that the specifying of the access information include at least one of:
prompting the user to enter the access information with respect to the web site; and
prompting the user to select one bookmark from at least one bookmark displayed on the display such that the access information with respect to the web site is selected.

It is also preferred that the information processing program further include:
inputting access information for terminal registration;
starting a terminal registration process by causing the authenticator to be connected to the network and causing the authenticator to access the authentication server apparatus based on the access information for the terminal registration, which is input by the inputting of the access information; and
registering the individual identification information of the information processing apparatus with the authentication server apparatus by performing communication with the authentication server apparatus.

According to another embodiment of the present invention, there is provided an information processing apparatus including:
display;
at least one web browser configured to access a web site via a communication network, and to cause the display to display information acquired from the web site;
specifying means for specifying access information with respect to the web site;
session establishing means for establishing a session between the information processing apparatus and an authentication server apparatus by causing authenticator to access the authentication server apparatus via the communication network based on the access information specified by the specifying means;
the authenticator for executing an individual identity authentication process for the information processing apparatus independently of the at least one web browser in response to a response from the authentication server apparatus by using the session established by the session establishing means; and
activation means for activating, when authentication by the individual identity authentication process succeeds, the at least one web browser, providing information of the session and the access information to the at least one web browser, and causing the at least one web browser to access the web site based on the information of the session and the access information.

According to still another embodiment of the present invention, there is provided an information processing method of executing an individual identity authentication process for an information processing apparatus,
the information processing apparatus including:
display;
authenticator; and
at least one web browser configured to access a web site via a communication network, and to cause the display to display information acquired from the web site,
the individual identity authentication process including:
specifying access information with respect to the web site;
establishing a session between the information processing apparatus and an authentication server apparatus by causing the authenticator to access the authentication server apparatus via the communication network based on the access information specified by the specifying of the access information;
executing the individual identity authentication process for the information processing apparatus independently of the at least one web browser in response to a response from the authentication server apparatus by using the session established by the establishing of the session; and
activating, when authentication by the individual identity authentication process succeeds, the at least one web browser, providing information of the session and the access information to the at least one web browser, and causing the at least one web browser to access the web site based on the information of the session and the access information.

According to the embodiments of the present invention, access to a web site via an appropriate web browser can be made under a state in which a secure session is established.

### Brief Description of Drawings

FIG. 1 is a configuration diagram of a computer system according to an embodiment of the present invention;
FIG. 2 is a block diagram showing an example of hardware configurations of an information processing apparatus and an authentication server apparatus;
FIG. 3 is a flowchart showing an example of a method of registering terminal authentication information and user authentication information in advance with the authentication server apparatus; and
FIG. 4 is a flowchart showing an example of an authentication process that is executed between the information processing apparatus and the authentication server apparatus before the information processing apparatus accesses a web site managed by a web server apparatus.

### Detailed Description of Embodiment

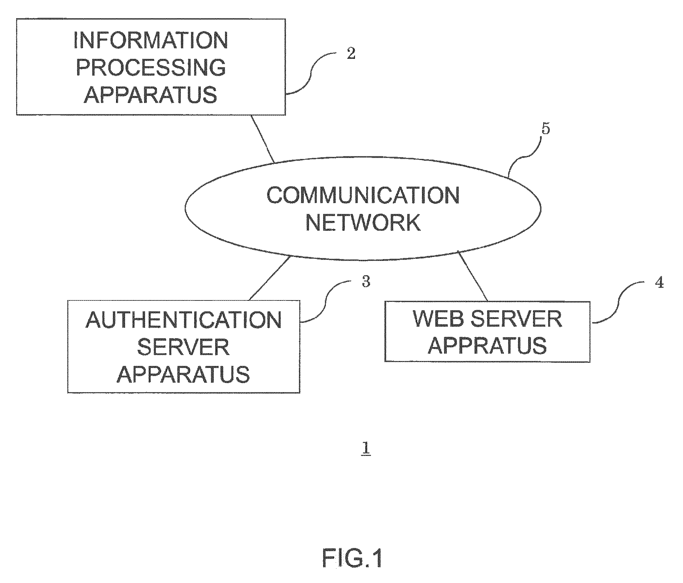

Now, with reference to the drawings, a computer system according to an embodiment of the present invention is described. FIG. 1 is a configuration diagram of a computer system 1 according to the embodiment of the present invention.

The computer system 1 shown in FIG. 1 includes an information processing apparatus 2, an authentication server apparatus 3, and a web server apparatus 4 that are connected to each other in a wired or wireless manner via a communication network 5 such as the Internet and a local area network. In this embodiment, the single information processing apparatus 2, the single authentication server apparatus 3, and the single web server apparatus 4 are connected to the communication network 5. However, this is merely an example, and those apparatus may each include a plurality of apparatus.

The information processing apparatus 2 is a computer configured to access the authentication server apparatus 3 and the web server apparatus 4, and to use services such as browsing and downloading of web content. Examples of the information processing apparatus 2 include client terminals such as a personal computer, a mobile phone, and a portable information terminal.

The authentication server apparatus 3 is a computer configured to execute an authentication process for determining whether to allow a user of the information processing apparatus 2 to access the web server apparatus 4. The authentication server apparatus 3 acquires, from the information processing apparatus 2, user authentication information items (such as user ID and password) and specific individual identification information of the information processing apparatus 2, and executes processes such as a terminal registration process and an individual identity authentication process for determining whether to allow the information processing apparatus 2 to access the web server apparatus 4.

The web server apparatus 4 is a server configured to provide the services such as browsing and downloading of various content information items that are requested via a web browser of the information processing apparatus 2, such as an HTML document, a video, and sound. The web server apparatus 4 communicates using HTTP. All of those content information items such as the HTML document are stored in the web server apparatus 4. Further, the web server apparatus 4 also provides services, specifically, use of applications such as webmail, access to membership sites, and online shopping payment.

Next, hardware configurations of the information processing apparatus 2 and the authentication server apparatus 3 are described in detail. Note that, in this embodiment, a hardware configuration of the web server apparatus 4 is the same as that of the authentication server apparatus 3, and hence description thereof is omitted. Further, as long as functions described below can be exerted, the configurations of the authentication server apparatus 3 and the web server apparatus 4 may be integrated into a single apparatus, or may be provided in two or more different apparatus.

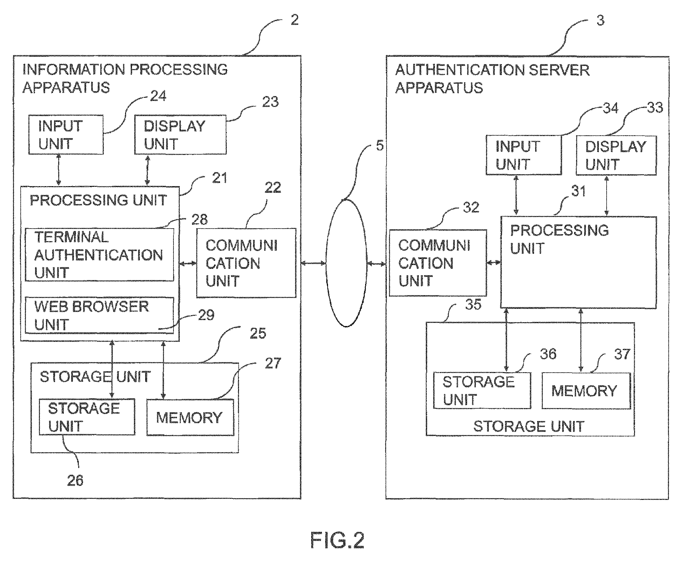

FIG. 2 is a block diagram showing an example of the hardware configurations of the information processing apparatus 2 and the authentication server apparatus 3.

As shown, for example, in FIG. 2, the information processing apparatus 2 includes a processing unit 21, a communication unit 22, a display unit 23, an input unit 24, and a storage unit 25.

The processing unit 21 is a circuit configured to control an overall operation of the information processing apparatus 2. Specifically, the processing unit 21 executes processes in accordance with various programs stored in the storage unit 25, a terminal authentication program transmitted from the authentication server apparatus 3, and other programs. More specifically, in response to an instruction that is entered via the input unit 24 by the user, the processing unit 21 communicates with the authentication server apparatus 3 via the communication unit 22, and causes the display unit 23 to display an input screen associated with the terminal authentication program received from the authentication server apparatus 3. Further, in response to the instruction, the processing unit 21 communicates also with the web server apparatus 4 via the communication unit 22, and executes processes in accordance with the services provided by the web server apparatus 4 (such as reproduction of the web content). The processing unit 21 includes a processor, a bus controller, and a cache memory. With this, while the processing unit 21 stores processing data to a memory 27 of the storage unit 25 as appropriate, the processing unit 21 sequentially executes instructions of the various programs.

As shown in FIG. 2, the processing unit 21 includes a terminal authentication unit 28 and a web browser unit 29. In response to the instruction that is entered via the input unit 24 by the user, the terminal authentication unit 28 communicates with the authentication server apparatus 3 using a protocol such as HTTP so as to acquire the web content such as the HTML data from the authentication server apparatus 3. The terminal authentication unit 28 also causes the display unit 23 to display an authentication page.

When the terminal authentication unit 28 receives cookie information containing a session ID and other information items from the authentication server apparatus 3, the terminal authentication unit 28 stores this information to the storage unit 25. Then, when the web browser unit 29 described below accesses again the web server apparatus 4 that contains the cookie information, the cookie information containing the session ID and other information items is transmitted to the web server apparatus 4.

Next, in response to the instruction that is entered via the input unit 24 by the user, the web browser unit 29 communicates with the web server apparatus 4 using the protocol such as HTTP so as to acquire the web content such as the HTML data from the web server apparatus 4. The web browser unit 29 causes the display unit 23 to display also a web page of the web content acquired from the web server apparatus 4.

Further, in accordance with the above-mentioned terminal authentication program transmitted from the authentication server apparatus 3, the processing unit 21 acquires specific information stored in the storage unit 25 (such as an information item that allows distinction from other terminal devices). Examples of the specific information include specific information items of the hardware modules of the information processing apparatus 2 (specific information items such as serial numbers assigned to a CPU, a motherboard, and peripheral devices), and information items of software modules installed in the information processing apparatus 2 (specific information items such as a license information item assigned to an operating system, and serial numbers assigned to a BIOS and application programs).

Note that, in cases where validity of the terminal authentication program cannot be verified in the terminal authentication unit 28, and where the user prohibits the execution of the terminal authentication program, the processing unit 21 does not acquire the specific information.

Further, in accordance with the above-mentioned terminal authentication program transmitted from the authentication server apparatus 3, the processing unit 21 also generates terminal authentication information containing the acquired specific information of the information processing apparatus 2. The processing unit 21 temporarily stores the generated authentication information to the storage unit 25.

Further, when the information processing apparatus 2 logs into the web server apparatus 4, the processing unit 21 transmits the generated authentication information and the user ID entered via the input unit 24 to the authentication server apparatus 3 via the communication unit 22.

Note that, the processing unit 21 has a cryptographic processing function to perform encryption and decryption by executing the above-mentioned terminal authentication program transmitted from the authentication server apparatus 3. Examples of this cryptographic processing function include encryption and decryption of the information items that are necessary for the authentication of the information processing apparatus 2, the encryption and the decryption being performed by an encryption method that uses, for example, AES.

The communication unit 22 is a circuit configured to communicate with the authentication server apparatus 3 and the web server apparatus 4 via the communication network 5. Specifically, the communication unit 22 executes signal processes and performs signal control for performing communication compliant with a predetermined standard such as "Ethernet" (trademark). Further, the communication unit 22 also modulates and demodulates signals, encrypts and decrypts data, processes packets, and controls timings of transmission and reception of the signals, the data, and the packets, which are transmitted in a wired or wireless manner.

The display unit 23 is configured to display screens in response to display signals that are entered via the processing unit 21. The display unit 23 includes a display device such as a liquid crystal display, an OLED display, and a CRT display, and a graphic controller configured to process image signals that are supplied to the display device.

The input unit 24 is a device configured to convert the instruction from the user and various information items, for example, to electrical signals, and to input the electrical signals to the processing unit 21. Examples of the input unit 24 include a keyboard, a mouse, operation buttons, a keypad, and a touchscreen sensor.

The storage unit 25 is a device configured to store the various programs and the various data items that are used at the time of execution of the processes in the processing unit 21. The storage unit 25 includes a storage device 26 having a relatively high capacity and being capable of maintaining the data items even under a power-off state, such as a hard disk and a flash ROM, and the memory 27 that operates at a relatively high speed, such as an SRAM. The storage device 26 stores, for example, the various programs such as the operating system, the BIOS, and the applications, and the specific information items described below of the information processing apparatus 2 (information items such as an ID of the CPU, and a serial number of the BIOS, and the license information item of the operating system), and the cookie information. The memory 27 stores execution codes of the various programs read out of the storage device 26, and data to be temporarily used during the processes.

Next, the hardware configuration of the authentication server apparatus 3 is described in detail. Note that, as described above, the hardware configuration of the web server apparatus 4 is the same as that of the authentication server apparatus 3, and hence description thereof is omitted.

The authentication server apparatus 3 shown in FIG. 2 includes a processing unit 31, a communication unit 32, a display unit 33, an input unit 34, and a storage unit 35.

The processing unit 31 is a circuit configured to control an overall operation of the authentication server apparatus 3. Specifically, the processing unit 31 executes processes in accordance with processing programs stored in the storage unit 34. More specifically, the processing unit 31 controls the communication unit 32 so as to communicate with the information processing apparatus 2. With this, the processing unit 31 executes the authentication process in response to a login request from the information processing apparatus 2, and processes of providing the services (such as content downloading) to the information processing apparatus 2. More specifically, the processing unit 31 includes a processor (CPU) configured to execute the processes in accordance with the processing programs, and a bus configured to perform data exchange with peripheral hardware modules (32 to 35), a circuit configured to control the bus (bus bridge circuit), and a cache memory. While the processing unit 31 stores both data items to be processed and data items being processed to a memory 37 of the storage unit 35 as appropriate, the processing unit 31 sequentially executes instructions of the processing programs.

Further, the communication unit 32, the display unit 33, and the input unit 34 of the authentication server apparatus 3 respectively have the same configurations as those of the communication unit 22, the display unit 23, and the input unit 24 of the information processing apparatus 2.

The storage unit 35 is a device configured to store the processing programs and the data items that are used at the time of execution of the processes in the processing unit 31. The storage unit 35 includes a storage device 36 having a relatively high capacity and being capable of maintaining the data items even under a power-off state, such as a hard disk and a flash ROM, and the memory 37 that operates at a relatively high speed, such as an SRAM. The storage device 36 stores, for example, the processing programs such as the operating system, the BIOS, and the applications, and the web content, a user database, and other data items. The memory 37 stores execution codes of the processing programs read out of the storage device 36, and data to be temporarily used during the processes.

When the processing unit 31 acquires, from the information processing apparatus 2, the authentication information, specifically, the specific terminal-authentication information item, and the user authentication information items containing the user ID and the password, the processing unit 31 associates those information items with the session ID issued for a communication session with the information processing apparatus 2. Then, the processing unit 31 stores this associated information item to the storage unit 35. In this case, to the storage unit 35, the session ID, a session information item, the terminal authentication information item, and the user authentication information items (user ID and password) are registered in association with each other. Further, examples of the session information item include an information item of a communication counterpart (such as IP address), and an information item indicating a state of the communication session (information items as to whether or not communication has been established, whether or not the user has logged in, and whether to allow login by the user).

Note that, the processing unit 31 also has the cryptographic processing function to perform the encryption and the decryption by executing the above-mentioned terminal authentication program. Examples of this cryptographic processing function include the encryption and the decryption of the information items that are necessary for the authentication of the information processing apparatus 2, the encryption and the decryption being performed by the encryption method that uses, for example, the AES.

The processing unit 31 acquires another password received from the information processing apparatus 2, and the password stored in the storage unit 35, which is associated with the session ID of the communication session with the information processing apparatus 2, and identifies whether both the passwords match with each other. As a result of this identification, when the another password received from the information processing apparatus 2 matches the password acquired from the storage unit 35, the processing unit 31 stores, to the storage unit 35, the session information item that allows the login.

Next, a process of registering the individual identification information in the computer system according to this embodiment, which is configured as described above, is described.

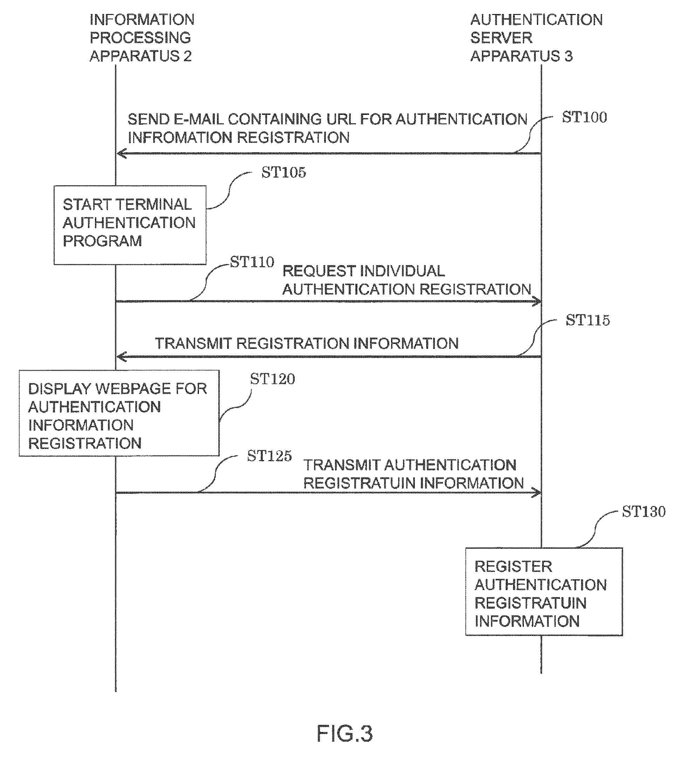

FIG. 3 is a flowchart showing an example of a method of registering the terminal authentication information item and the user authentication information item in advance with the authentication server apparatus 3.

First, the authentication server apparatus 3 issues an URL of a web page for authentication information registration, and sends an e-mail containing the URL for the authentication information registration to the information processing apparatus 2 (Step ST100) . The authentication server apparatus 3 acquires an e-mail address from the information processing apparatus 2, for example, via a web page for entering the e-mail address, and sends the e-mail to the e-mail address.

After the information processing apparatus 2 receives the e-mail from the authentication server apparatus 3 via the communication unit 22, the user of the information processing apparatus 2 operates the input unit 24 so as to start the terminal authentication program. With this, the terminal authentication unit 28 is activated, and the input screen for entering the URL is displayed on the display unit 23 (Step ST105).

The user selects, for example, with the mouse of the input unit 24, the URL contained in the notification e-mail. In response, the terminal authentication unit 28 independent of the web browser unit 29 accesses the authentication server apparatus 3 corresponding to the URL, and requests the individual authentication registration (Step ST110).

Note that, as a matter of course, by means other than sending of the e-mail containing the URL for the authentication information registration to the information processing apparatus 2 as in this embodiment, information of the URL can be transmitted to the user of the information processing apparatus 2. In that case, after the user of the information processing apparatus receives this information, the user starts the terminal authentication program of the information processing apparatus 2, and enters the URL via the input screen displayed on the display unit 23.

When the authentication server apparatus 3 receives the request and determines that the registration is necessary, the authentication server apparatus 3 transmits registration information that contains content (such as HTML data) of the web page for the authentication information registration to the information processing apparatus 2 (Step ST115).

Based, for example, on the HTML data received from the authentication server apparatus 3, the terminal authentication unit 28 of the information processing apparatus 2 causes the display unit 23 to display the web page for the authentication information registration. Via a screen of this web page, the user is prompted to enter the user ID and the password of his/her own (Step ST120). Note that, the user ID may be an ID that is issued by the authentication server apparatus 3 and displayed on the screen of the web page, and the user may be prompted to memorize this ID.

When the user ID and the password are entered via the input unit 24, the terminal authentication unit 28 temporarily stores those user ID and password to the storage unit 25.

Then, the terminal authentication unit 28 acquires, from the storage unit 25, the user ID and the password that are temporarily stored therein, and the individual identification information of the information processing apparatus 2, which is also stored in the same. Next, the terminal authentication unit 28 transmits those information items as authentication registration information to the authentication server apparatus 3 (Step ST125). At the time of this transmission, the processing unit 21 may encrypt such transmission data items including those authentication information items using a cryptographic communication protocol such as SSL.

Alternatively, the processing unit 21 may encrypt the user ID, the password, the authentication information with a predetermined key, and transmit encrypted data of those information items to the authentication server apparatus 3. In this case, the authentication server apparatus 3 decrypts the data encrypted by the processing unit 21.

After the authentication server apparatus 3 receives the user ID, the password, and the individual identification information from the information processing apparatus 2, the authentication server apparatus 3 associates those information items with each other, and registers those information items with the user database in the storage unit 35 (Step ST130). The web server apparatus 4 may be connected to the web server apparatus 4 via, for example, the local area network, and may access the user database via this local area network. Alternatively, data of those information items may be transmitted from the authentication server apparatus 3 to the web server apparatus 4 by means of cryptographic communication using SSL or other protocols.

Next, description is made of an example of the authentication process that is executed between the information processing apparatus 2 and the authentication server apparatus 3 at the time when the information processing apparatus 2 accesses a web site managed by the web server apparatus 4.

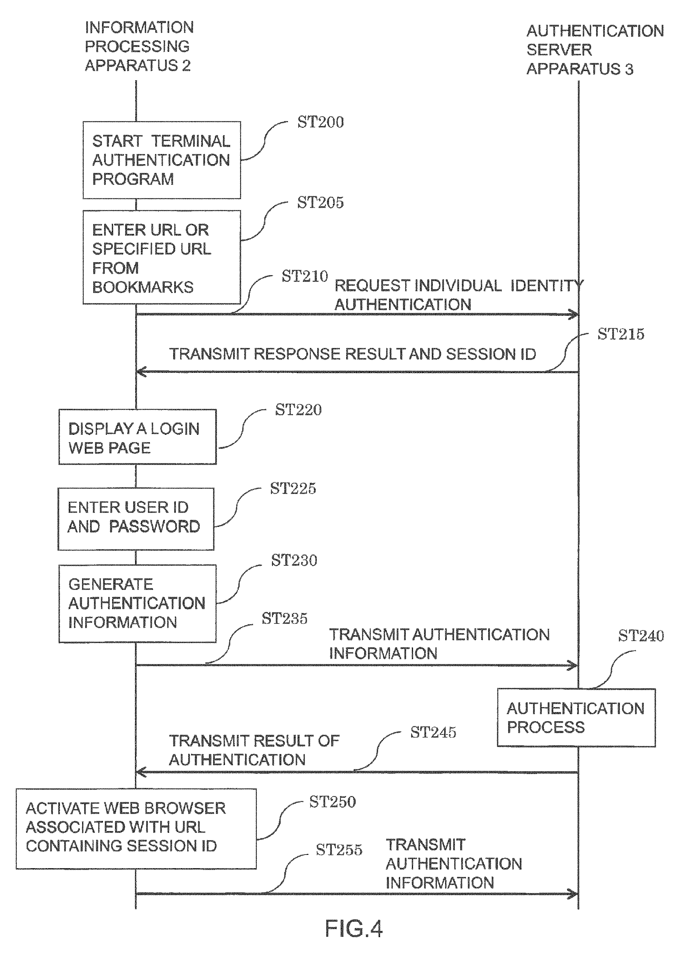

FIG. 4 is a flowchart showing the example of the authentication process that is executed between the information processing apparatus 2 and the authentication server apparatus 3 before the information processing apparatus 2 accesses the web site managed by the web server apparatus 4.

First, the terminal authentication program stored in the storage unit 25 of the information processing apparatus 2 is started (Step ST200). With this, the terminal authentication unit 28 independent of the web browser unit 29 causes the display unit 23 to display the input screen for entering URLs, or an input screen such as a pull-down menu, which allows selection from one or a plurality of bookmarks that have already been associated with the URLs. This process may be executed in response to an operation to the input unit 24 by the user of the information processing apparatus 2, or executed automatically at the time, for example, when the information processing apparatus 2 restores from a sleep mode.

Via the input unit 24, the user enters an URL of a target web site into the input screen displayed on the display unit 23, or specifies the URL from the bookmarks on the input screen displayed on the display unit 23 (Step ST205). Then, the terminal authentication unit 28 specifies this URL and accesses the authentication server apparatus 3 (Step ST210). With this access, the communication session between the information processing apparatus 2 and the authentication server apparatus 3 is established.

In response to the access from the information processing apparatus 2, the authentication server apparatus 3 determines whether or not the individual identity authentication process for the information processing apparatus 2 is necessary for browsing of the web site corresponding to the specified URL. When the individual identity authentication process is necessary, the authentication server apparatus 3 sends a response to the information processing apparatus 2 (Step ST215).

Further, together with the response, the authentication server apparatus 3 issues the session ID of the communication session with the information processing apparatus 2, and also transmits the cookie information item containing this session ID to the information processing apparatus 2.

In response to the response from the authentication server apparatus 3, the terminal authentication unit 28 of the information processing apparatus 2 causes the display unit 23 to display a login web page (Step ST220). Via a screen of this web page, the user is prompted to enter the user ID and the password of his/her own.

When the user ID and the password are entered via the input unit 24 (Step ST225), the terminal authentication unit 28 temporarily stores those user ID and password to the storage unit 25.

Meanwhile, when the terminal authentication unit 28 receives an information item that the individual identity authentication process is unnecessary, the terminal authentication unit 28 causes the display unit 23 to display a web site associated with access information on a web browser preset by the information processing apparatus 2.

Then, based on the individual identification information item stored in the storage unit 25, and on the user ID and the password that are temporarily stored in the same, the terminal authentication unit 28 of the information processing apparatus 2 generates the authentication information item, and temporarily stores this authentication information item to the storage unit 25 (Step ST230).

Further, the terminal authentication unit 28 of the information processing apparatus 2 also stores, to the storage unit 25, the cookie information item (containing session ID) received from the authentication server apparatus 3.

The terminal authentication unit 28 of the information processing apparatus 2 transmits the authentication information item stored in the storage unit 25 to the authentication server apparatus 3 (Step ST235).

When the authentication server apparatus 3 receives another authentication information item containing the user ID, the password, and the individual identification information item from the information processing apparatus 2, the authentication server apparatus 3 executes the authentication process of comparing the another authentication information item with the authentication information item registered with the user database in the authentication server apparatus 3 (Step ST240). A result of the authentication is transmitted from the authentication server apparatus 3 to the information processing apparatus 2 (Step ST245). Based on this result, the authentication process is executed in the information processing apparatus 2. For example, when both the authentication information items match with each other, the authentication succeeds.

Note that, when both the authentication information items do not match with each other, the authentication fails and is terminated, for example, by causing the display unit 23 of the information processing apparatus 2 to display an error message.

When the authentication succeeds, the terminal authentication unit 28 of the information processing apparatus 2 acquires the above-mentioned URL containing the session ID from the storage unit 25, and causes the web browser unit 29 to activate a web browser that is associated with this URL (Step ST250).

The web browser unit 29 establishes a connection to the authentication server apparatus 3 via the URL containing the session ID (Step ST255). At this time, the same communication session that is used in the authentication process executed by the terminal authentication unit 28 is used again, and the preceding result of the authentication is used as it is. With this, related-art applications and browser programs themselves to be operated on browsers, such as "ActiveX" and "Java applet, " need not execute the authentication process by acquiring, for example, the individual information of the information processing apparatus 2. Thus, a secure session can be maintained.

As described above, the information processing apparatus 2 according to this embodiment includes the communication unit 22 to function as a communication interface configured to communicate with external apparatus such as the authentication server apparatus 3 and the web server apparatus 4 via the communication network 5. The information processing apparatus 2 also includes one or a plurality of web browsers configured to access external web sites via the communication unit 22, and display information acquired from those web sites on the display unit 23. The information processing apparatus 2 also includes an authentication application configured to execute the individual identity authentication process independently of the web browsers. The web browsers are operated by the web browser unit 29 of the processing unit 21, and the authentication application is operated by the terminal authentication unit 28 of the processing unit 21. The information processing apparatus 2 further includes the input unit 24 configured to allow specification of the access information with respect to the web sites. Based on the specified access information, the processing unit 21 is connected to the communication network 5, and the authentication application accesses the external authentication server apparatus 3 configured to control the individual identity authentication processes on terminals that access the web sites. Then, the authentication application requests the information as to whether or not the individual identity authentication process is necessary. Further, the authentication application acquires the information as to whether or not the individual identity authentication process is necessary and the session information from the authentication server apparatus 3. When the individual identity authentication process is necessary, the authentication application executes the individual identity authentication process for the information processing apparatus 2. Then, when authentication by the individual identity authentication process succeeds, the authentication application selects and causes the web browser unit 29 to activate the web browser that is preset based on the access information that is necessary for access to a target web site. In addition, the authentication application provides the session information and the access information to the web browser. Meanwhile, under the state in which the session between the information processing apparatus 2 and the authentication server apparatus 3 is established, the web browser accesses the target web site associated with the access information, and causes the display unit 23 to display the information acquired from the target web site.

Note that, as described above, the individual identity authentication process is executed when the processing unit 21 acquires, from the authentication server apparatus 3, the information that the individual identity authentication process is necessary. Specifically, the individual identity authentication process includes acquiring the individual identification information of the information processing apparatus 2 from the storage unit 25 of the information processing apparatus 2, acquiring the user authentication information of the user of the information processing apparatus 2, generating the authentication information containing the individual identification information and the user authentication information, providing the authentication information to the authentication server apparatus 3, requesting the individual identity authentication process to the authentication server apparatus 3, and receiving the result of the individual identity authentication process from the authentication server apparatus 3.

Note that, the present invention is not limited to the embodiment described above. Specifically, those skilled in the art may make various modifications, combinations, sub-combinations, and alterations of the components of the embodiment described above within the technical scope of the present invention or the equivalents thereof.

Further, in the embodiment described above, the individual identification information of the information processing apparatus 2 is acquired from the storage unit 25. However, the present invention is not limited thereto. For example, the individual identification information may be acquired from, for example, memories of the peripheral devices that are controlled by the processing unit 21.

Still further, in the present invention, the user authentication information is not limited to the user ID and the password. Information obtained through biometric authentication such as fingerprint authentication and vein authentication may be used as the user authentication information.

The above-mentioned individual identification information may be either one of the specific identification information items of the hardware modules of the information processing apparatus 2, such as the serial number of the CPU and a serial number of an HDD, and the specific identification information items of the software modules of the information processing apparatus 2, such as the serial number of the BIOS and the license number of the operating system.

Further, the above-mentioned individual identification information may be a random number shared in advance between the information processing apparatus 2 and the authentication server apparatus 3. The random number may be generated by any of the information processing apparatus 2, the authentication server apparatus 3, and other apparatus.

In addition, in the embodiment described above, the operations and the processes in the computer system including the information processing apparatus 2 according to the embodiment of the present invention are executed by the hardware configuration. However, the present invention is not limited thereto. Those operations and processes may be executed by providing the various programs such as the terminal authentication program to the information processing apparatus 2 according to the embodiment of the present invention via computer-readable recording media such as a flexible disk, a hard disk, a magnetic disk, a magneto-optical disk, a CD-ROM, a DVD-ROM, and a flash memory, or via communication networks such as the Internet, and by causing the CPU of the information processing apparatus 2 to execute those programs.
- 2: information processing apparatus
- 3: authentication server apparatus
- 4: web server apparatus
- 5: communication network
- 21: processing unit
- 22: communication unit
- 23: display unit
- 24: input unit
- 25: storage unit
- 28: terminal authentication unit
- 29: web browser unit

## Claims

1. A program for causing an information processing apparatus to execute an individual identity authentication process for the information processing apparatus,
the information processing apparatus including:
display;
authenticator; and
at least one web browser configured to access a web site via a communication network, and to cause the display to display information acquired from the web site,
the information processing program for causing the information processing apparatus to execute the individual identity authentication process comprising:
specifying access information with respect to the web site;
establishing a session between the information processing apparatus and an authentication server apparatus by causing the authenticator to access the authentication server apparatus via the communication network based on the access information specified by the specifying of the access information;
executing the individual identity authentication process for the information processing apparatus independently of the at least one web browser in response to a response from the authentication server apparatus by using the session established by the establishing of the session; and
activating, when authentication by the individual identity authentication process succeeds, the at least one web browser, providing information of the session and the access information to the at least one web browser, and causing the at least one web browser to access the web site based on the information of the session and the access information.

2. The program for causing the information processing apparatus to execute the individual identity authentication process according to claim 1,
wherein the at least one web browser includes a web browser associated with the access information that is necessary for access to the web site, and
wherein, the activating of the at least one browser includes selecting and activating, when the authentication by the individual identity authentication process succeeds, the web browser associated with the access information.

3. The program for causing the information processing apparatus to execute the individual identity authentication process according to claim 1 or 2, wherein the information processing program further comprises causing the display to display the information acquired from the web site by the at least one web browser that has accessed the web site in the activating of the at least one browser.

4. The program for causing the information processing apparatus to execute the individual identity authentication process according to any one of claims 1 to 3, wherein the executing of the individual identity authentication process comprises:
firstly acquiring individual identification information of the information processing apparatus in response to the response from the authentication server apparatus;
secondly acquiring user authentication information of a user of the information processing apparatus;
causing the authentication server apparatus to execute the individual identity authentication process by providing the individual identification information and the user authentication information to the authentication server apparatus; and
receiving a result of the individual identity authentication process from the authentication server apparatus.

5. The program for causing the information processing apparatus to execute the individual identity authentication process according to one of claims 1 to 4, wherein the individual identification information comprises at least one of:
specific identification information items of hardware modules of the information processing apparatus, the hardware modules including a central processing unit and a hard disk drive;
specific identification information items of software modules of the information processing apparatus, the specific identification information items of the software modules including a serial number of a basic input/output system and a license number of an operating system; and
a random number shared between the information processing apparatus and the authentication server apparatus.

6. The program for causing the information processing apparatus to execute the individual identity authentication process according to one of claims 1 to 5, wherein the activating of the at least one browser comprises causing, in the information processing apparatus, the display to display the information acquired from the web site associated with the access information on the web browser associated with the access information except when the information processing apparatus receives a response that the individual identity authentication process is necessary from the authentication server apparatus.

7. The program for causing the information processing apparatus to execute the individual identity authentication process according to any one of claims 1 to 6, wherein the specifying of the access information comprises at least one of:
prompting the user to enter the access information with respect to the web site; and
prompting the user to select one bookmark from at least one bookmark displayed on the display such that the access information with respect to the web site is selected.

8. processing program for causing the information processing apparatus to execute the individual identity authentication process according to any one of claims 1 to 7, wherein the information processing program further comprises:
inputting access information for terminal registration;
starting a terminal registration process by causing the authenticator to be connected to the network and causing the authenticator to access the authentication server apparatus based on the access information for the terminal registration, which is input by the inputting of the access information; and
registering the individual identification information of the information processing apparatus with the authentication server apparatus by performing communication with the authentication server apparatus.

9. A non-transitory computer-readable recording medium storing an information processing program for causing an information processing apparatus to execute an individual identity authentication process for the information processing apparatus,
the information processing apparatus including:
display;
authenticator; and
at least one web browser configured to access a web site via a communication network, and to cause the display to display information acquired from the web site,
the information processing program for causing the information processing apparatus to execute the individual identity authentication process comprising:
specifying access information with respect to the web site;
establishing a session between the information processing apparatus and an authentication server apparatus by causing the authenticator to access the authentication server apparatus via the communication network based on the access information specified by the specifying of the access information;
executing the individual identity authentication process for the information processing apparatus independently of the at least one web browser in response to a response from the authentication server apparatus by using the session established by the establishing of the session; and
activating, when authentication by the individual identity authentication process succeeds, the at least one web browser, providing information of the session and the access information to the at least one web browser, and causing the at least one web browser to access the web site based on the information of the session and the access information.

10. An information processing apparatus, comprising:
display;
at least one web browser configured to access a web site via a communication network, and to cause the display to display information acquired from the web site;
specifying means for specifying access information with respect to the web site;
session establishing means for establishing a session between the information processing apparatus and an authentication server apparatus by causing authenticator to access the authentication server apparatus via the communication network based on the access information specified by the specifying means;
the authenticator for executing an individual identity authentication process for the information processing apparatus independently of the at least one web browser in response to a response from the authentication server apparatus by using the session established by the session establishing means; and
activation means for activating, when authentication by the individual identity authentication process succeeds, the at least one web browser, providing information of the session and the access information to the at least one web browser, and causing the at least one web browser to access the web site based on the information of the session and the access information.

11. An information processing method of executing an individual identity authentication process for an information processing apparatus,
the information processing apparatus including:
display;
authenticator; and
at least one web browser configured to access a web site via a communication network, and to cause the display to display information acquired from the web site,
the individual identity authentication process comprising:
specifying access information with respect to the web site;
establishing a session between the information processing apparatus and an authentication server apparatus by causing the authenticator to access the authentication server apparatus via the communication network based on the access information specified by the specifying of the access information;
executing the individual identity authentication process for the information processing apparatus independently of the at least one web browser in response to a response from the authentication server apparatus by using the session established by the establishing of the session; and
activating, when authentication by the individual identity authentication process succeeds, the at least one web browser, providing information of the session and the access information to the at least one web browser, and causing the at least one web browser to access the web site based on the information of the session and the access information.
